## Europäisches Patentamt

## European Patent Office

## Office européen des brevets

(11) Numéro de publication: **0 155 326**

**B1**

(12) **FASCICULE DE BREVET EUROPÉEN**

(45) Date de publication du fascicule du brevet:
29.04.87

(51) Int. Cl.⁴: **B 62 B 3/12**

(21) Numéro de dépôt: **83450007.6**

(22) Date de dépôt: **17.03.83**

(54) **Chariot de manutention.**

(30) Priorité: **17.03.82 FR 8204660**

(43) Date de publication de la demande:
**25.09.85 Bulletin 85/39**

(45) Mention de la délivrance du brevet:
**29.04.87 Bulletin 87/18**

(84) Etats contractants désignés:
**DE GB IT**

(56) Documents cité:
**BE-A-642 401**
**DE-C-724 699**
**FR-A-1 157 435**
**FR-A-1 322 099**
**FR-A-2 118 230**
**GB-A-1 420 393**
**GB-A-1 602 436**
**US-A-1 533 837**

(73) Titulaire: **RIPPES S.A., Avenue de Magudas B.P. no 7, F-33160 Le Haillan (FR)**

(72) Inventeur: **Courrege, Claude, 6, rue Maurice Ravel, F-33160 Le Haillan (FR)**

(74) Mandataire: **Marquer, Francis, CABINET MOUTARD 35, avenue Victor Hugo Résidence Champfleury, F-78180 Voisins- le- Bretonneux (FR)**

## Description

La présente invention est relative à un chariot de manutention à trois roues disposées triangulairement permettant à un point quelconque situé sur la droite passant par un des sommets et perpendiculaire au côté opposé et à un tracé à suivre, un déplacement parallèle et à égale distance du tracé pouvant comporter un angle aigu, obtu ou droit, une ligne droite ou courbe.

On connaît les chariots à trois roues fixes et/ou pivotantes disposées triangulairement, généralement deux roues placées selon un alignement perpendiculaire au sens de déplacement à l'avant ou à l'arrière du chariot.

Les chariots à trois roues fixes (DE-A-724 699) permettent des déplacements aisés parallèles et à égale distance d'un tracé rectiligne, ils ne permettent pas à un point donné compris dans le tracé triangulaire ou extérieur audit tracé un déplacement parallèle et à égale distance du tracé pouvant comporter une ligne droite et/ou plusieurs angles courbes.

Dans le cas de chariots à trois roues pivotantes (BE-A-642 401) le déplacement parallèle, et à égale distance d'un point selon un tracé comme précédemment décrit est malaisé pour une seule personne poussant ou tirant le chariot étant donné que les roues mobiles ne sont pas stables, afin de compenser cette instabilité durant le déplacement et selon la charge et la répartition de celle-ci, il est nécessaire de guider le chariot à l'avant et à l'arrière.

On connaît aussi les chariots dotés de deux roues fixes et une roue pivotante (US-A-1602 436) ou deux roues pivotantes et une roue fixe placée à l'avant ou à l'arrière du sens de déplacement, le déplacement parallèle et à égale distance d'un point quelconque selon un tracé comme précédemment décrit ne peut être effectué sans qu'il soit nécessaire de recentrer à plusieurs reprises le chariot.

L'invention a pour but de supprimer les inconvénients précédemment exposés.

L'invention a pour objet un chariot de manutention à trois roues disposées selon une disposition triangulaire isocèle, équilatérale ou quelconque caractérisé en ce qu'il comporte deux roues pivotantes fixées à deux sommets de la disposition triangulaire, la troisième roue fixe étant fixée au troisième sommet, le côté matérialisé par les roues pivotantes étant placé parallèlement au sens de déplacement lorsque celui-ci est une ligne droite de sorte à permettre à un point quelconque situé sur une droite passant par le sommet de la disposition triangulaire correspondant à l'emplacement de la roue fixe et perpendiculaire au côté matérialisé par les roues pivotantes, d'effectuer un déplacement parallèle et à égale distance d'un tracé pouvant comporter une ou plusieurs lignes droites, angles aigus, obtus ou droits ainsi qu'effectuer un pivotement concentrique à des courbes, ledit point pouvant être situé dans la disposition triangulaire ou extérieur à ladite disposition.

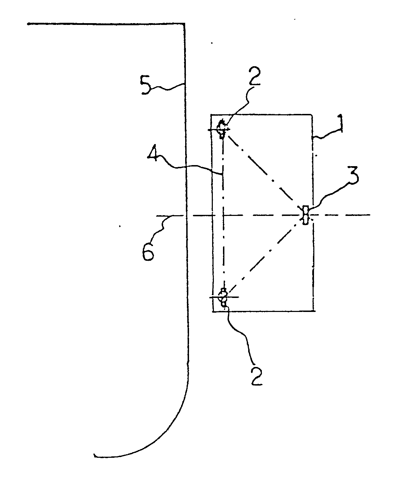

Le dessin annexé illustre schématiquement la disposition des roues sous une plateforme par rapport à un tracé extérieur à la disposition triangulaire des roues.

Tel que représenté, le chariot comporte fixées sous la plateforme 1 de configuration pouvant être indifférente deux roues pivotantes 2 et une roue fixe 3 selon une disposition triangulaire en l'occurrence isocèle, le côté 4 matérialisé par les deux roues mobiles étant placé parallèlement au sens de déplacement lorsque celui-ci est une ligne droite, le tracé 5 du déplacement à effectuer pouvant comporter une ou des lignes droites, des angles aigus, obtus ou droits et des courbes, ledit tracé comme représenté est placé extérieurement à la disposition triangulaire des roues 2 à proximité du côté 4 ledit tracé pouvant être disposé sous la disposition triangulaire ou extérieurement à celle-ci d'un côté ou de l'autre, la disposition des roues pivotantes 2 parallèles au sens de déplacement et de la roue fixe 3 permettant à un point quelconque situé sur la droite passant par le sommet matérialisé par la roue fixe 3 et perpendiculaire au côté 4, un déplacement parallèle et à égale distance du tracé à suivre, ledit point pouvant être compris à l'intérieur de la disposition triangulaire ou extérieure à ladite disposition.

## Revendications

1°) Chariot de manutention à trois roues disposées sous une plateforme support selon une disposition triangulaire caractérisé en ce qu'il comporte deux roues pivotantes (2) fixées sous la plateforme (1) à deux sommets de la disposition triangulaire, la troisième roue fixe (3) étant fixée au troisième sommet, le côté (4) matérialisé par les roues pivotantes (2) étant placé parallèlement au sens de déplacement lorsque celui-ci est une ligne droite de sorte à permettre à un point quelconque situé sur une droite (6) passant par le sommet matérialisé par la roue fixe (3) et perpendiculaire au côté (4) d'effectuer un déplacement parallèle et à égale distance d'un tracé (5) pouvant comporter une ou plusieurs lignes droites, angles aigus, obtus ou droits ainsi qu'effectuer un pivotement concentrique à des courbes.

2°) Chariot de manutention selon la revendication 1 caractérisé en ce que le point quelconque à déplacer parallèlement et à égale distance du tracé (5) est compris dans la disposition triangulaire ou extérieur à celle-ci.

3°) Chariot de manutention selon la revendication 1 caractérisé en ce que le tracé (5) est disposé, soit sous la disposition triangulaire, ou extérieur à ladite disposition.

## Patentansprüche

1. Transportwagen mit drei Rädern, die unter einer Trägerfläche im Dreieck angebracht sind, dadurch gekennzeichnet dass er zwei schwenkbare Räder (2) besitzt, die unter der Plattform (1) an zwei Scheitelpunkten der Dreiecksanordnung befestigt sind und dass das dritte feststehende Rad (3) am dritten Scheitelpunkt befestigt ist, wobei die durch die beiden schwenkbaren Räder (2) markierte Seite (4) sich parallel zur Bewegungsrichtung befindet, wenn diese eine gerade Linie ist, sodass ein beliebiger Punkt auf einer Geraden (6), welche den von feststehenden Rad (3) markierten Scheitel schneidet und die senkrecht zur Seite (4) verläuft, eine Bewegung, parallel und in gleichbleibenden Abstand zu einer Linie (5) ausführen kann,-wobei diese Linie aus einer oder mehreren Geraden, aus spitzen, stumpfen oder rechten Winkeln bestehen kann-, sowie eine zu Kurven konzentrische Schwenkung.

2. Transportwagen nach Anspruch 1, dadurch gekennzeichnet, dass der Punkt, welcher parallel und in gleichbleibenden Abstand zu der Linie (5) bewegt werden soll, sich inner- oder ausserhalb der Dreiecksanordnung befindet.

3. Transportwagen nach Anspruch 1, dadurch gekennzeichnet, dass die linie (5) sich unter- oder ausserhalb der Dreiecksanordnung befindet.

## Claims

1. A transport cart having three wheels situated under a support platforn in a triangular disposition, characterized in that it comprises two pivoting wheels (2) fixed under the platform (1) at two vertexes of the triangular disposition, the third, fixed, wheel being fixed at the third vertex, the side (4) defined by the pivoting wheels (2) being situated parallel to the direction of movement when this latter is a straight line, so as to enable any point placed on a straight line (6) passing through the vertex defined by the fixed wheel (3) and perpendicular to the side (4) to move parallel to and at a non-varying distance from a plotting which may comprise one or more straight lines, acute, obtuse or right angles, as well as to pivot concentrically to curves.

2. The transport cart according to claim 1, characterized in that any point to be moved in parallel to and at a non-varying distance from the plotting (5) is comprised in the triangular disposition or situated outside thereof.

3. The transport cart according to claim 1, characterized in that the plotting (5) is situated either below the triangular disposition or outside thereof.